Europäisches Patentamt

European Patent Office

Office européen des brevets

(11) Veröffentlichungsnummer: **0 402 582**
**A2**

(12) **EUROPÄISCHE PATENTANMELDUNG**

(21) Anmeldenummer: **90105491.6**

(22) Anmeldetag: **23.03.90**

(51) Int. Cl.5: **C08L 63/00, C08L 75/00**

(30) Priorität: **15.06.89 DE 3919547**

(43) Veröffentlichungstag der Anmeldung:
**19.12.90 Patentblatt 90/51**

(84) Benannte Vertragsstaaten:
**AT BE CH DE DK ES FR GB GR IT LI LU NL SE**

(71) Anmelder: **RÜTGERSWERKE**
**AKTIENGESELLSCHAFT**
**Mainzer Landstrasse 217**
**D-6000 Frankfurt am Main 1(DE)**

(72) Erfinder: **Grundke, Ulrich**
**Bronkhorstrasse 52**
**D-4100 Duisburg 12(DE)**
Erfinder: **Mathes, Alfred, Dr.**
**Königsbergerstrasse 55**
**D-4134 Rheinberg 1(DE)**
Erfinder: **Hansen, Achim, Dr.**
**Hammer Dorfstrasse 85**
**D-4000 Düsseldorf 1(DE)**
Erfinder: **Herzog, Rolf, Dr.**
**Beethovenstrasse 12 a**
**D-4250 Bottrop(DE)**

(54) **Härtungsmittel für Epoxidharze.**

(57) Die Erfindung betrifft neue Härtungsmittel für Epoxidharze, die zu flexiblen gehärteten Produkten mit hohen mechanischen Eigenschaften führen. Diese flexiblen Härter werden hergestellt durch Umsetzung von Polyalkylenetherdiolen und/oder Polyalkylenetherpolyolen mit Di- und/oder Polyisocyanaten, wobei das Verhältnis von OH-Gruppen zu Isocyanat-Gruppen im Bereich von 1 : 1,8 bis 3 liegt, Umsetzung der erhaltenen Isocyanatverbindungen mit einem Amin, das mindestens eine freie primäre oder sekundäre Aminogruppe und mindestens eine mit einer Schutzgruppe blockierte primäre Aminogruppe enthält und Hydrolyse der erhaltenen Verbindung.

EP 0 402 582 A2

## Härtungsmittel für Epoxidharze

Die Erfindung betrifft neue Härtungsmittel für Epoxidverbindungen, insbesondere Epoxidharze, die zu flexiblen gehärteten Produkten mit hohen mechanischen Eigenschaften führen.

Derartige Härtungsmittel werden in der Fachwelt als flexible Härter bezeichnet.

Dem Fachmann ist die Verwendung von Polyetherurethanharnstoffaminen in Epoxidharzhärtern bekannt. Diese Härter ermöglichen die Herstellung hochwertiger Epoxidharzformstoffe, die als Beschichtungs-, Überzugsmittel, zur Herstellung von Formkörpern und Laminaten oder als Dichtungsstoffe Verwendung finden.

Aus DE-OS 23 38 256 sind flexible Härter auf der Basis von Polyetherurethanharnstoffaminen bekannt.

Diese Härter haben den Nachteil, daß sie sehr hohe Viskositäten besitzen und deshalb nur in Lösung anwendbar sind, was ihre Verwendung in vielen Bereichen stark einschränkt, bzw. sogar unmöglich macht.

Aus DE-OS 31 51 592 sind flexible Härter auf der Basis von Polyetherurethancarbaminsäurearylestern bekannt, die durch Umsetzungen von Polyetherurethancarbaminsäurearylestern mit Aminen hergestellt werden.

Die Verwendung von Polyetherurethancarbaminsäurearylestern als Zwischenstufe führt aufgrund der selektiveren Umsetzung zu Produkten mit niedrigerer Viskosität. Die bei der Reaktion freigesetzten phenolischen Komponenten -häufig Phenol oder Nonylphenol- verbleiben jedoch in der Härterkomponente und reagieren bei der Aushärtung nicht mit dem Epoxidharz. Die Anwesenheit der nicht in das Polymernetz chemisch eingebundenen phenolischen Komponenten führt zu einer Reihe erheblicher Nachteile.

Die phenolischen Komponenten bewirken eine Verschlechterung der mechanischen Eigenschaften in den ausgehärteten Formstoffen, was auf ihre Wirkung als externe Weichmacher und die Verminderung der Netzwerkdichte zurückzuführen ist. Dies begenzt den Anwendungsbereich erheblich und schließt Anwendungen wie im Faserverbundsektor aus.

Darüber hinaus kommt es bei Faserverbundwerkstoffen im Bereich der Grenzfläche von Faser und Matrix zusätzlich zu einer verminderten Haftung aufgrund einer Anreicherung der im Härter enthaltenen phenolischen Komponenten.

Zudem ist eine unzureichende Langzeitbeständigkeit der mechanischen Werte und der chemischen Beständigkeit gegeben, da die phenolischen Komponenten herausdiffundieren, herausgelöst werden oder die Aufnahme von Wasser, Lösungsmittel und Chemikalien begünstigen. Phenole führen zudem zu einer Beschleunigung der Härtungsreaktion von Aminen mit Epoxidharzen. Dies ist oftmals unerwünscht.

Es ist daher Aufgabe der Erfindung, flexible Härter bereitzustellen, die mit Epoxidverbindungen gehärtete Produkte mit dem gleichen guten Eigenschaftsprofil ergeben wie mit flexiblen Härtern gemäß DE-OS 31 51 592 gehärtete Epoxidharze, die jedoch ausschließlich reaktive Komponenten enthalten, d. h. Komponenten, die bei der Aushärtungsreaktion in den Formstoff chemisch über eine Amin-Epoxidreaktion kovalent eingebaut werden und somit frei von externen Weichmachern sind.

Die Lösung der Aufgabe erfolgt durch Härtungsmittel gemäß der Ansprüche 1 und 2 und durch Verfahren zu ihrer Herstellung gemäß den Ansprüchen 3-7.

Die Härtungsmittel finden, zusammen mit einer oder mehreren Epoxidverbindungen, Verwendung zur Herstellung flexibler Formteile oder Flächengebilde, insbesondere von Laminaten, sowie zur Herstellung von Dicht- und Klebstoffen oder Beschichtungen gemäß der Ansprüche 9-12.

Darüberhinaus eignen sich die Härtungsmittel als reaktive Emulgatoren zur Herstellung wasseremulgierbarer Epoxid-Bindemittel gemäß Anspruch 8.

Es wurde gefunden, daß man Härter erhält, die mit Epoxidverbindungen flexible gehärtete Produkte mit guter Chemikalien- und Alterungsbeständigkeit, guten elektrischen und physikalischen Eigenschaften, insbesondere mit erhöhter Weiterreißfestigkeit ergeben, wenn man isocyanatendständige Umsetzungsprodukte von Polyalkylendiolen oder Polyalkylenpolyolen mit Di- und/oder Polyisocyanaten mit einem Amin umgesetzt, das mindestens eine freie, primäre oder sekundäre Aminogruppe und mindestens eine mit einer Schutzgruppe blockierte, primäre Aminogruppe enthält und die resultierenden Verbindungen hydrolysiert.

Die so hergestellten aminoendständigen Härter sind helle, niedrig- bis zähviskose (10-60 Pa·s bei 52 °C) Produkte, die, gegebenenfalls mit zusätzlichen reaktiven Härterkomponenten, mit Epoxidverbindungen, insbesondere mit Epoxidharzen mit mindestens zwei Epoxidgruppen pro Moleküleinheit im äquimolaren Verhältnis von Amino- und Epoxidgruppen vermischt werden. Die Härtung erfolgt entweder bei Raumtemperatur innerhalb von 24-72 h nach dem Vermischen (Verarbeitbarkeitszeit: 3-5 h), oder bei erhöhter Temperatur.

Die erfindungsgemäßen Härtungsmittel können darüberhinaus in an sich bekannter Weise mit zusätzlichen üblichen Aminhärtern wie z. B. aliphatischen und/oder cycloaliphatischen Polyaminen, Polyamiden,

2

aminendständigen Polyalkylethern, primären längerkettigen Monoaminen oder aminendständigen Butadien-Acrylnitril-Copolymerisaten kombiniert eingesetzt werden.

Die Herstellung der erfindungsgemäßen Härter erfolgt demnach in drei Reaktionsschritten aus an sich bekannten Vorprodukten:

(1) Umsetzung von Polyalkylendiolen und/oder Polyalkylenpolyolen mit Di- und/oder Polyisocyanaten.

(2) Umsetzung des Reaktionsproduktes aus (1) mit einem Amin, das mindestens eine freie primäre oder sekundäre Aminogruppe und mindestens eine mit einer Schutzgruppe geschützte primäre Aminogruppe enthält, wobei die freien primären oder sekundären Aminogruppen mit den Isocyanatgruppen des Reaktionsproduktes aus (1) reagieren.

(3) Hydrolyse des Reaktionsproduktes aus (2) unter Abspaltung der Schutzgruppe und damit Freisetzung der primären Aminogruppe bzw. Aminogruppen.

Durch diese gezielte Umsetzung jeweils definiert reagierender Komponenten werden genau vorherbestimmte Härtungsmittel synthetisiert, deren Zusammensetzung und Aufbau bei verschiedenen Produktionschargen nicht variiert.

Als Einsatzprodukte für den ersten Reaktionsschritt dienen handelsübliche Polyalkylenetherdiole und/oder Polyalkylenetherpolyole und Isocyanatverbindungen.

Die Polyalkylenetherdi- oder -polyole haben mittlere Molekulargewichte zwischen 100 und 5.000, vorzugsweise zwischen 400 und 2.000. Besonders bevorzugt sind Polyethylenoxide oder Polypropylenoxide.

Beispiele für Di- oder Polyisocyanate sind:

2,4- und 2,6-Toluylendiisocyanat oder Gemische davon,

4,4-Diphenylmethandiisocyanat,

m-Xylylendiisocyanat,

2,2,4-(2,4,4)Trimethylhexamethylendiisocyanat,

1,6-Hexamethylendiisocyanat,

1-Isocyanato-3-isocyanatomethyl-3,5,5-trimethyl-cyclohexan (auch Isophorondiisocyanat genannt) und das Additionsprodukt aus 1 Mol Trimethylolpropan und 3 Mol Isophorondiisocyanat

Besonders geeignet sind aliphatische und cycloaliphatische Diisocyanate wie z. B. Hexamethylendiisocyanat und Isophorondiisocyanat.

Für die Herstellung der Reaktionsprodukte werden die Polyalkylenetherdi- oder -polyole und die Isocyanate so gemischt, daß ein Verhältnis der OH-Gruppen zu den Isocyanatgruppen von 1 : 1,8 bis 3, vorzugsweise aber von 1 : 2,1 bis 2,5, eingestellt wird.

Das Reaktionsgemisch wird, eventuell gemeinsam mit einem Lösemittel und/oder mit geringen Mengen eines Katalysators wie z. B. 0,1 % Dibutylzinndilaurat, einige Stunden auf 50 bis 100 °C erwärmt, bis der analytisch ermittelte Isocyanatgehalt mit dem berechneten Wert weitgehend übereinstimmt.

Die so hergestellten Isocyanatverbindungen werden ohne weitere Aufarbeitung dem 2. Reaktionsschritt unterworfen. Eventuell im Reaktionsgemisch vorhandener Katalysator katalysiert auch die zweite Umsetzung. Für diese Umsetzung lassen sich Amine einsetzen, die mindestens eine primäre und eine sekundäre Aminogruppe besitzen, wobei mindestens eine primäre Aminogruppe mit einer Schutzgruppe blockiert ist. Als Beispiele für verwendbare Amine seien genannt:

Ethylendiamin, Diethylentriamin, 1,2-Diaminopropan, 1,3-Diaminopropan, 1,3-Diaminobutan, 1,4-Diaminobutan, 3-(n-Isopropyl-amino)propylamin, Hexapropylenheptamin, 1-Cyclohexylamino-3-aminopropan, 1,4-Diaminocyclohexan, 1,3-Diaminocyclohexan, 2,4-Diaminocyclohexan, 1,3-Di(amino-cyclo-hexyl)propan, N,N'-Diethyl-1,3-diaminopropan, N,N'-Diethyl-1,4-diaminocyclohexan, N-Aminoethylepiperazin, N-Aminopropylpiperazin, N-Aminobutylpiperazin, 1,3-Dipiperazinylpropan, 1,3-Dipiperidylpropan, 3-(2-Aminoethyl)-aminopropylamin, N,N'-bis-(3-Aminopropyl)-ethylendiamin, die handelsüblichen primären aliphatischen Polyoxipropylendi- oder triamine, Phenylendiamin, 4,4'-Diamino-diphenylmethan sowie Etherdiamine wie z. B. 1,7-Diamino-4-oxa-heptan, 1,7-Di-amino-3,5-dioxa-heptan, 1,10-Diamino-4,7-dioxa-decan, 1,10-Diamino-4,7-dioxa-5-methyldecan, 1,11-Diamino-6-oxa-undecan, 1,11-Diamino-4,8-dioxaundecan, 1,11-Diamino-4,8-dioxa-5-methyl-undecan, 1,11-Diamino-4,8-dioxa-5,6-dimethyl-7-propionylundecan, 1,12-Diamino-4,9-dioxadodecan, 1,13-Diamino-4,10-dioxatridecan, 1,13-Diamino-4,7,10-trioxa-5,8-dimethyl-tridecan, 1,14-Diamino-4,11-dioxa-tetradecan, 1,14-Diamino-4,7,10-trioxatetradecan, 1,16-Diamino-4,7,10,13-tetraoxa-hexadecan, 1,20-Diamino-4,17-dioxa-eicosan und insbesondere Hexamethylendiamin, 3,3,5(3,5,5)-Trimethyl-hexamethylendiamin und 3,3'-Dimethyl-4,4'-diaminodicyclohexylmethan und insbesondere Isophorondiamin, N-Aminoethyl-piperazin, 1,2-Diaminopropan, Methyl-pentamethylendiamin, Xylylendiamin oder Mischungen dieser Amine, aber auch Polyaminoamide oder Polyalkylenpolyamine.

Entsprechende Schutzgruppen werden durch Umsetzung der primären Aminogruppe mit Aldehyden oder Ketonen insbesondere mit Methylethylketon, Methylpropylketon, Methylbutylketon, Diethylketon oder Dipropylketon erhalten.

Die Reaktion der Isocyanatverbindung mit der freien Aminogruppe des teilweise blockierten Amins ist der empfindlichste Schritt. Während die entsprechenden Hydroxyverbindungen sehr selektiv mit Isocyanaten reagieren, besteht bei Aminen die Gefahr, daß Isocyanatgruppen in dem alkalischen Milieu miteinander reagieren, daß somit unerwünschte Nebenreaktionen stattfinden. Es wurde gefunden, daß sich diese Nebenreaktionen weitgehend vermeiden lassen, wenn die Umsetzung im Beisein von 20-80 % Lösemitteln wie z. B. Aromaten, Alkoholen, Estern, Ketonen oder Ethern stattfindet. Außerdem empfiehlt es sich, dem Reaktionsmedium geringe Mengen 0,001-2 % eines für diese Reaktion üblichen Katalysators wie z. B. Diazabicyclooctan, Dibutylzinndilaurat oder Zinn(II)-octoat zuzugeben.

So werden 1 Mol des Reaktionsproduktes aus dem ersten Schritt langsam zu 2-4 Mol (bevorzugt zu 2,6-3,2 Mol) blockierten Amin zugegeben und bei 60-80 °C 3-5 h lang umgesetzt. Danach sind keine freien Isocyanatgruppen mehr vorhanden.

Pro Äquivalent eingesetztem, mit Schutzgruppe blockiertem Amin werden nun 1-2 Mol Wasser zum Reaktionsgemisch gegeben und das Ganze etwa eine Stunde bei 60-80 °C gehalten. Anschließend werden die flüchtigen Bestandteile wie Lösemittel, überschüssiges Wasser und die abgespaltene Schutzgruppe abdestilliert. Das erhaltene Produkt ist fertig für den Einsatz als Härtungsmittel für Epoxidverbindungen.

## Beispiele

Der Ausdruck GT bezeichnet Gewichtsteile, RT bedeutet Raumtemperatur.

### Beispiel 1

129 g N-Aminoethylpiperazin, 200 g Methyl-isobutylketon, 200 g Cyclohexan und 0,3 g p-Toluolsulfonsäure werden 3 bis 4 Stunden unter Rückfluß am Wasserabscheider umgesetzt. Überschüssiges Lösungsmittel wird anschließend im Vakuum entfernt. Es entsteht ein Amin-Ketimin.

### Beispiel 2

444 g Isophorondiisocyanat werden in trockenem Toluol gelöst und auf 50 bis 60 °C erhitzt. Nach Zugabe von 1 g Dibutylzinndilaurat werden innerhalb von 3 Stunden 2.000 g Polypropylenoxiddiol mit einer mittleren Molmasse von 2.000 eingetropft. Anschließend folgen 2 Stunden Nachreaktion bei 80 bis 85 °C. Es entsteht ein Isocyanatpräpolymeres.

### Beispiel 3

444 g Isophorondiisocyanat werden in trockenem Toluol gelöst und auf 50 bis 60 °C erhitzt. Nach Zugabe von 1 g Dibutylzinndilaurat werden innerhalb von 3 Stunden 700 g Polypropylenoxiddiol mit einer mittleren Molmasse von 700 eingetropft. Anschließend folgen 2 Stunden Nachreaktion bei 80 bis 85 °C. Es entsteht ein Isocyanatpräpolymeres.

### Beispiel 4

348 g 2,4-Toluoldiisocyanat werden in trockenem Toluol gelöst und auf 50 bis 60 °C erhitzt. Nach Zugabe von 1 g Dibutylzinndilaurat werden innerhalb von 3 Stunden 2.000 g Polypropylenoxiddiol mit einer mittleren Molmasse von 2.000 eingetropft. Anschließend folgen 2 Stunden Nachreaktion bei 80 bis 85 °C. Es entsteht ein Isocyanatpräpolymeres.

### Beispiel 5

2.444 g des gemäß Beispiel 2 hergestellten Isocyanatpräpolymers werden innerhalb von 3 Stunden in 764 g des gemäß Beispiel 1 hergestellten Amin-Ketimins bei 80 °C eingetropft. Nach weiteren 3 Stunden Nachreaktion bei 80 °C werden 100 g Wasser zugegeben und das Reaktionsgemisch 1 Stunde bei 80 °C gerührt. Anschließend werden die Lösungsmittel, das Keton und das Wasser am Rotationsverdampfer entfernt. Es entsteht eine flexible Härterkomponente mit einer Viskosität von 19.500 mPa•s bei 52 °C und einem Aminäquivalent von 565.

Beispiel 6

1.144 g des gemäß Beispiel 3 hergestellten Isocyanatpräpolymers werden innerhalb von 3 Stunden in 764 g des gemäß Beispiel 1 hergestellten Amin-Ketimins bei 80 °C eingetropft. Nach weiteren 3 Stunden Nachreaktion bei 80 °C werden 100 g Wasser zugegeben und das Reaktionsgemisch 1 Stunde bei 80 °C gerührt. Anschließend werden die Lösungsmittel , das Keton und das Wasser am Rotationsverdampfer entfernt. Nach Zugabe von 144 g Trimethylhexanethylendiamin wird eine flexible Härterkomponente mit einer Viskosität von 21.000 mPa•s bei 52 °C und einem Aminäquivalent von 183 erhalten.

Beispiel 7

2.348 g des gemäß Beispiel 4 hergestellten Isocyanatpräpolymers werden innerhalb von 3 Stunden in 764 g des gemäß Beispiel 1 hergestellten Amin-Ketimins bei 80 °C eingetropft. Nach weiteren 3 Stunden Nachreaktion bei 80 °C werden 100 g Wasser zugegeben und das Reaktionsgemisch 1 Stunde bei 80 °C gerührt. Anschließend werden die Lösungsmittel, das Keton und das Wasser am Rotationsverdampfer entfernt. Es entsteht eine flexible Härterkomponente mit einer Viskosität von 73.700 mPa•s bei 52 °C und einem Aminäquivalent von 553.

Beispiele 8 bis 10 (Vergleichsbeispiele)

Beispiel 8

2.444 g des gemäß Beispiel 2 dargestellten Isocyanatpräpolymers werden mit 440 g Nonylphenol verkappt und anschließend mit 310 g N-Aminoethylpiperazin umgesetzt. Der Härter hat ein Aminäquivalent von 650 und einen Gehalt an freiem Nonylphenol von ca. 13 %.

Beispiel 9

1.144 g des gemäß Beispiel 3 dargestellten Isocyanatpräpolymers werden mit 440 g Nonylphenol verkappt und anschließend mit 310 g N-Aminoethylpiperazin und 288 g Trimethylhexanethylendiamin umgesetzt. Der Härter hat ein Aminäquivalent von 233 und einen Gehalt an freiem Nonylphenol von ca. 20 %.

Beispiel 10

1.144 g des gemäß Beispiel 3 dargestellten Isocyanatpräpolymers werden mit 188 g Phenol verkappt und anschließend mit 310 g N-Aminoethylpiperazin und 288 g Trimethylhexanethylendiamin umgesetzt. Der Härter hat ein Aminäquivalent von 204 und einen Gehalt an freiem Phenol von ca. 10 %.

Beispiel 11

Jeweils 100 GT eines Epoxidharzes auf der Basis von Bisphenol-A und Epichlorhydrin mit einem Epoxidäquivalent von 186 und einer Viskosität von 9.800 mPa s bei 25 °C werden mit verschiedenen Härtern vermischt und die Klebefestigkeit von einschnittig überlappten Klebungen mit doppelt plattierten Aluminiumstreifen nach DIN 53283 bestimmt.
Die Ergebnisse finden sich in Tabelle I.

Tabelle I

| Härter aus Beispiel | GT Härter | Klebefestigkeit nach 7 d RT + 2 h 100 °C |
|---|---|---|
| 5 | 304 | 12,1 N/mm$^2$ |
| 6 | 98 | 26,3 N/mm$^2$ |
| 8 | 349 | 8,4 N/mm$^2$ |
| 9 | 125 | 17,6 N/mm$^2$ |
| 10 | 110 | 19,7 N/mm$^2$ |

Beispiel 12

Epoxidharz gemäß Beispiel 11 wird mit verschiedenen Härtern während 8 h bei 40 °C, 4 h bei 80 °C und danach 2 h bei 130 °C gehärtet. Anschließend wird der Glasumwandlungspunkt Tg bestimmt.

a. 75,15 GT Harz, 14,85 GT Isophorondiamin und 10,0 GT Härter gemäß Beispiel 6

Tg : 118 °C

b. 75,05 GT Harz, 14,95 GT Isophorondiamin und 10,0 GT Härter gemäß Beispiel 7

Tg : 121 °C

c. 73,15 GT Harz, 14,45 GT Isophorondiamin und 12,4 GT Härter gemäß Beipiel 9

Tg : 110 °C

Beispiel 13

Probekörper der Größe 100 x 100 x 4 mm hergestellt mit Epoxidharz-Härter-Mischungen gemäß Beispiel 11 a bis c werden jeweils bei 40 °C mit je 800 ml Wasser (pH 7) und mit Leinöl extrahiert und eventuell extrahierte Phenole werden gaschromatographisch bestimmt.

Die Ergebnisse finden sich in Tabelle II.

Tabelle II

| Probe aus Beispiel | Wäßrige Extraktion 1. - 3. Tag | Ölextraktion 1. - 3. Tag |
|---|---|---|
| 11 a | kein Phenol | kein Phenol |
| 11 b | kein Phenol | kein Phenol |
| 11 c | Nonylphenol 2,4 mg/m$^2$d | Nonylphenol 3,1 mg/m$^2$d |

Beispiel 14

Mit den folgenden Epoxidharz-Systemen 1 und 2 werden im Naßlaminierverfahren jeweils 4 mm dicke Platten mit 16 Lagen Glasgewebe hergestellt und 16 h bei 120 °C getempert.

Das eingesetzte Epoxidharz ist ein Gemisch aus

56 GT Bisphenol-A-Epoxidharz

24 GT Bisphenol-F-Epoxidharz

20 GT Hexandiol-diglycidylether

Mit den Epoxidharz-Systemen bzw. an den damit hergestellten Platten werden folgende Eigenschaften geprüft:

Glasumwandlungspunkt Tg

Biegefestigkeit (DIN 53452) bei TG - 15 °C.

Biegefestigkeit (DIN 53452) bei Tg - 15 °C nach Feuchtelagerung 4 Stunden bei 80 °C.

Interlaminare Scherfestigkeit (DIN 29971) bei 25 °C. Ausgasrate zur Ermittlung der Raumfahrttauglichkeit gemäß ESA-Norm PSS 01 702.

Epoxidharz-Systeme:

System 1:

67,3 GT Epoxidharz

17,7 GT 3,3′-Dimethyl-4,4′-diaminodicyclohexyl-methan

15,0 GT Härter gemäß Beispiel 6

System 2:

(Vergleichsbeispiel)

66,5 GT Epoxidharz

18,5 GT 3,3′-Dimethyl-4,4′-diaminodicyclohexyl-methan

15,0 GT Härter gemäß Beispiel 9

Die erhaltenen Ergebnisse finden sich in Tabelle III.

Tabelle III

|  | System 1 | System 2 |
|---|---|---|
| Tg | 102 °C | 95 °C |
| Biegefestigkeit bei Temp. = Tg - 15 °C | 319 N/mm² | 277,8 N/mm² |
| Biegefestigkeit bei Temp. = Tg - 15 °C nach Feuchtelagerung | 264,1 N/mm² | 219,6 N/mm² |
| Interlaminare Scherfestigkeit | 45,5 N/mm² | 38,2 N/mm² |
| Ausgasraten | bestanden | nicht bestanden |

## Ansprüche

1. Härtungsmittel für Epoxidverbindungen, hergestellt durch Umsetzung von Polyalkylenetherdiolen und/oder Polyalkylenetherpolyolen mit Di- und/oder Polyisocyanaten, wobei das Verhältnis von OH-Gruppen zu Isocyanat-Gruppen im Bereich von 1 : 1,8 bis 3 liegt, Umsetzung der erhaltenen Isocyanatverbindungen mit einem Amin, das mindestens eine freie primäre oder sekundäre Aminogruppe und mindestens eine mit einer Schutzgruppe blockierte primäre Aminogruppe enthält und Hydrolyse der erhaltenen Verbindung.

2. Härtermischungen für Epoxidverbindungen, **dadurch gekennzeichnet,** daß sie Härtungsmittel nach Anspruch 1 und übliche Aminhärter enthalten.

3. Verfahren zur Herstellung der Härtungsmittel nach Anspruch 1, **dadurch gekennzeichnet,** daß Polyalkylenetherdiole und/oder Polyalkylenetherpolyole und Di- und/oder Polyisocyanate im molaren Verhältnis der OH-Gruppen zu Isocyanatgruppen von 1 : 1,8 bis 3 umgesetzt, die erhaltenen isocyanatendständigen Verbindungen mit einem Amin, das mindestens eine freie, primäre oder sekundäre Aminogruppe und mindestens eine mit einer Schutzgruppe blockierte, primäre Aminogruppe enthält, im Verhältnis der Isocyanatgruppen zu freien, sekundären Aminogruppen von 1 : 1-2 umgesetzt, die resultierenden Verbindungen hydrolysiert und die dabei entstehenden Verbindungen mit endständigen Aminogruppen in an sich bekannter Weise isoliert werden.

4. Verfahren nach Anspruch 3, **dadurch gekennzeichnet,** daß das Verhältnis der OH-Gruppen zu Isocyanatgruppen 1 : 2,1-2,5 beträgt.

5. Verfahren nach den Ansprüchen 3 und 4, **dadurch gekennzeichnet,** daß das Piperazinderivat eine Ketiminoverbindung ist.

6. Verfahren nach Anspruch 5, **dadurch gekennzeichnet,** daß das Amin ein Ketimin aus Methylisobutylketon und N-Propylaminopiperazin ist.

7. Verfahren nach den Ansprüchen 3-6, **dadurch gekennzeichnet,** daß die Umsetzung der isocyanatendständigen Verbindungen mit den Aminoverbindungen unter Mitwirkung eines Lösemittels erfolgt.

8. Verwendung der Härtungsmittel nach Anspruch 1 als reaktive Emulgatoren zur Herstellung wasseremulgierbarer Epoxid-Bindemittel.

9. Verwendung der Härtungsmittel nach den Ansprüchen 1 oder 2 zusammen mit einer oder mehreren Epoxidverbindungen, zur Herstellung flexibler Formteile oder Flächengebilde.

10. Verwendung der Härtungsmittel nach den Ansprüchen 1 oder 2, zusammen mit einer oder mehreren Epoxidverbindungen, zur Herstellung von Laminaten.

11. Verwendung der Härtungsmittel nach den Ansprüchen 1 oder 2, zusammen mit einer oder mehreren Epoxidverbindungen, zur Herstellung von Klebstoffen oder Beschichtungen.

12. Verwendung der Härtungsmittel nach den Ansprüchen 1 oder 2, zusammen mit eier oder mehreren Epoxidverbindungen, zur Herstellung von Dichtstoffen.